(19)

Europäisches
Patentamt
European
Patent Office
Office européen
des brevets

(11) **EP 2 309 659 A1**

(12) **EUROPEAN PATENT APPLICATION**

(43) Date of publication:
**13.04.2011 Bulletin 2011/15**

(51) Int Cl.:
*H04B 7/06* (2006.01)     *H04B 7/08* (2006.01)
*H04B 7/04* (2006.01)

(21) Application number: **09368038.7**

(22) Date of filing: **12.10.2009**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**
Designated Extension States:
**AL BA RS**

(71) Applicants:
• **ST-Ericsson (France) SAS**
  **38000 Grenoble (FR)**
• **ST-Ericsson SA**
  **1228 Plan-les-Ouates (CH)**
• **ST-Ericsson B.V.**
  **5656 AG Eindhoven (NL)**

(72) Inventors:
• **Ancora, Andrea**
  **06300 Nice (FR)**
• **Paker, Özgün**
  **5612 DH, Eindhoven (NL)**
• **Stassen, Maurice**
  **5641 HB Eindhoven (NL)**

(74) Representative: **Schuffenecker, Thierry**
  **Cabinet Thierry Schuffenecker**
  **120, Chemin de la Maure**
  **06800 Cagnes sur Mer (FR)**

(54) **Process for computing channel quality indicator (CQI) in a spatial multiplexed MIMO wireless communication system using non linear detection**

(57) A process for computing Channel Quality Indicator (CQI) in a receiver for a spatial multiplexed Multiple Input Multiple Output (MIMO) wireless communication system, said receiver including a non linear detector, said process involving the steps of:
- estimating (10) a channel matrix **H** at the receiver;
- computing (20) $\mathbf{H}^H\mathbf{H}$;
- computing (30) Cholesky factor **C**, with **C** being a triangular matrix having diagonal elements $c_{k,k}$ and satisfying the following equation:

$$\mathbf{H}^H\mathbf{H} = \mathbf{C}^H\mathbf{C};$$

- computing (40) per stream Signal-to-Interference Ratio (SINR) by applying the formula: $SINR_k = \dfrac{c_{k,k}^2}{\sigma^2}$, with $\sigma^2$ being the noise variance;
- computing (50) per stream channel capacity $C_k$ by applying the formula:

$$C_k = \log_2(1 + SINR_k);$$

- quantizing (60) the Channel Quality Indicator (CQI) according to the computed per stream channel capacity $C_k$;
- reporting (70) the quantized CQI to the transmitter.

The process is particularly adapted to non linear detection process based on the use of a Sphere Decoder.

```
Estimate the matrix H
of the communication channel        10
              ↓
Compute   H^H H                     20
              ↓
Compute Cholesky factor C           30
              ↓
Compute   SINR_k = c_{k,k}^2 / σ^2  40
              ↓
Compute per stream capacity  C_k    50
              ↓
Quantize and compute CQI            60
              ↓
Report CQI to base station          70
```

# Fig. 1

EP 2 309 659 A1

## Description

## Technical field

The invention relates to the field of wireless digital communications and more particularly to a process for computing Channel Quality Indicator (CQI) in a spatial multiplexed Multiple Input Multiple Output (MIMO) wireless communication system using non linear detection, such as based on a Sphere Decoder.

## Background Art

MIMO (Multiple-Input and Multiple-Output) is an advanced technology widely used in recent wireless communication systems and applicable to 3GPP (3rd Generation Partnership Project) and 3GPP LTE (Long Term Evolution) standards.

Specifically, MIMO is based on the use of multiple antennas at both the transmitter and receiver of a communication system in order to improve the communication performance of the latter.

One well known technique for improving the communication performance of a MIMO wireless system is called spatial multiplexing. This technique is based on the transmission of independent and separately encoded data signals (streams) from each of the multiple transmit antennas of a wireless communication system. In that way, the space dimension is reused (multiplexed) more than one time, resulting in an increase of the data flow.

In practical, in spatial multiplexing, the data signal that is transmitted by a transmitter (base station) is determined by the information that is reported to the transmitter by a receiver (User Equipment) of a communication system. This information is relevant to the direction (i.e. communication angles) and the code rate, modulation scheme of the data signal and is necessary for optimizing the channel capacity and maximizing the signal transmission of the system.

More particularly, the code rate and modulation scheme of the data signal transmitted to the User Equipment (UE) is controlled by a parameter called Channel Quality Indicator (CQI). In order to achieve a sufficient quality of data communication, CQI as defined by the 3rd Generation Partnership Project (3GPP), must result in a Block Error Rate (BLER) of 10%.

Although the quality of data communication in a spatial multiplexing MIMO channel is improved by providing several copies of the same information stream, the correct retrieval of each stream is impaired by the significant interference that arises in the presence of multiple UEs.

In order to overcome the effects of interference and correctly detect each stream, different types of equalizers are used at the UEs. In particular, the baseline spatial multiplexing equalizer for the 3GPP standard is the Linear Minimum Mean Square Error (LMMSE) equalizer.

In the case of the LMMSE equalizer recommended by the 3GPP as a baseline spatial-multiplexing LTE mode detection, the formula to be used for computing the CQI is given as follows :

1) For an *N* stream spatial multiplexing transmission, computing per-stream SINR Letting the *NxN* channel matrix $\mathbf{H} = [\mathbf{h}_1 \ \mathbf{h}_2 \ ... \ \mathbf{h}_N]$ with $\mathbf{h}_k$ being the *k*-th stream

*Nx1* channel column vector, then
$$SINR_k = \frac{\frac{1}{\sigma^2}\mathbf{h}_k^H\left(\mathbf{I}+\frac{1}{\sigma^2}\mathbf{H}\mathbf{H}^H\right)^{-1}\mathbf{h}_k}{1-\frac{1}{\sigma^2}\mathbf{h}_k^H\left(\mathbf{I}+\frac{1}{\sigma^2}\mathbf{H}\mathbf{H}^H\right)^{-1}\mathbf{h}_k}$$

2) Computing per-stream capacity (i.e. throughput/CQI mapping) as a function of per-stream SINR

$$C_k = \log_2(1+SINR_k)$$

Such formula is however not usable if one contemplates to use a more efficient non linear detection method, such as based on the use of a Sphere Decoder which, in case of high Signal to Noise Ratio (SNR) and high correlated channels, shows to be the more efficient equalizer.

Indeed, the sphere decoding equalizer has the advantage of achieving the overall channel capacity

$$C = \log_2\left(\det\left(\mathbf{I} + \frac{1}{\sigma^2}\mathbf{H}^H\mathbf{H}\right)\right),$$ , where **H** is the channel matrix, **I** is the identity matrix and $\sigma^2$ is the noise variance.

Prior art patent US7428269 (Qualcomm) discloses one known method for achieving a per-stream CQI computation in case of sphere decoder equalizer detection.

Specifically, it provides a formula for computing the per-stream Signal-to-Interference Ratio (SINR) as the diagonal elements $r_{k,k}$ of matrix **R** from the QR decomposition of the channel matrix **H** divided by the noise variance:

$$SINR_k = \frac{r_{k,k}}{\sigma^2},$$ \ , with **H** = **QR** , where **Q** is an *NxN* matrix and **R** is an upper triangular *NxN* matrix.

Once computed, the *SINR_k* is used in this known method to calculate the per stream channel capacity in accordance with the formula:

$$C_k = \log_2(1 + SINR_k)$$

Required for computing the CQI.

However, it appears that the QR decomposition of channel matrix **H** does not provide an accurate method for performing per stream CQI computation and furthermore it computes matrix **Q** which is not needed as only matrix **R** is used.

It has been shown that an accurate CQI computation is critical for ensuring optimal system capacity exploitation.

In such a context, there is a strong desire to improve the accuracy provided by the known technique and achieving an alternative method for computing the per-stream CQI applicable to a non linear detection, such as a Sphere Decoder based detection.

**Summary of the invention**

It is an object of the present invention to provide an exact method to compute the CQI for the 2x2 MIMO case well adapted to the use of a non linear detection.

It is a further object of the present invention to provide an approximated method which could be used in particular for Sphere Decoder implementation compliant with future releases of LTE (LTE advanced) supporting higher MIMO orders (3x3 and 4x4).

It is another object of the present invention to provide a process for reporting uplink a Channel Quality Information to a based station in a 3GPP LTE MIMO communication system using a Sphere Decoder.

It is still a further object of the present invention to provide a per-stream CQI computation process which ensures optimal system capacity exploitation adapted to a detection process based on a Sphere Decoder.

These and other objects are achieved by means of a process for computing Channel Quality Indicator (CQI) in a receiver for a spatial multiplexed Multiple Input Multiple Output (MIMO) wireless communication system defined in claim 1. The receiver includes a non linear detector and involves the steps of:

- estimating a channel matrix **H** at the receiver;
- computing $\mathbf{H}^H\mathbf{H}$ ;
- computing Cholesky factor **C**, with **C** being a triangular matrix having diagonal elements $c_{k,k}$ and satisfying the following equation:

$$\mathbf{H}^H\mathbf{H} = \mathbf{C}^H\mathbf{C};$$

- computing per-stream Signal-to-Interference-and-Noise-Ratio (SINR) by applying the formula: $$SINR_k = \frac{c_{k,k}^2}{\sigma^2},$$ ,

with $\sigma^2$ being the noise variance;
- computing per stream channel capacity $C_k$ by applying the formula:

$$C_k = \log_2(1 + SINR_k) \,;$$

- quantizing the Channel Quality Indicator (CQI) according to the computed per stream channel capacity $C_k$;
- reporting the quantized CQI to the transmitter.

In one embodiment, the non linear detector is based on a Sphere Decoder.
Preferably, the process is executed in a Long Term Evolution (LTE) system and within a mobile telephone.
The invention also achieves a receiver for a spatial multiplexed *NxN* MIMO wireless communication system , which receiver includes a non linear detector, such as a Sphere Decoder for instance, and which further comprises:

- means for estimating a channel matrix **H** at the receiver;
- means for computing **H**$^H$**H** ;
- means for computing Cholesky factor **C**, with **C** being a triangular matrix having diagonal elements $c_{k,k}$ and satisfying the following equation: **H**$^H$**H** = **C**$^H$**C**;

- means for computing per-stream Signal-to-Interference-and-Noise-Ratio (SINR) by applying the formula:

$$SINR_k = \frac{c_{k,k}^2}{\sigma^2} \,, \,$$ , with $\sigma^2$ being the noise variance;

- means for computing per stream channel capacity $C_k$ by applying the formula: $C_k = \log_2(1 + SINR_K)$;
- means for quantizing the Channel Quality Indicator (CQI) according to the computed per stream channel capacity $C_k$;
- means for reporting the quantized CQI to the transmitter.

The invention is particularly useful for providing an accurate CQI computation in the case of a 2x2 spatial multiplexed MIMO system.
In the case of a 2x2, the process involves the steps of:

- estimating a channel matrix **H** at the receiver;
- computing squared channel matrix **H**$^H$**H**;
- performing Singular Value Decomposition (SVD) on the squared channel matrix **H**$^H$**H** under the form:

$$\mathbf{H}^H\mathbf{H} = \mathbf{U}\Lambda\mathbf{U}^H$$

with, **U** denoting a unitary matrix, **U**$^H$ denoting the conjugate transpose of **U** and $\Lambda$ being a diagonal matrix with singular values as diagonal elements;

- computing per-stream Signal-to-Interference-and-Noise-Ratio (SINR) by applying the formula $SINR_k = \frac{\lambda_k}{\sigma^2} \,, \,$

with $\sigma^2$ being the noise variance
- computing per-stream channel capacity $C_k$ by applying the formula:

$$C_k = \log_2(1 + SINR_k) \,;$$

- quantizing the Channel Quality Indicator (CQI) according to the computed per-stream channel capacity $C_k$;
- reporting the quantized CQI to the transmitter.

In one embodiment, the SVD is practically performed by means of solving the characteristic equation:

$$\det\left(\mathbf{H}^H\mathbf{H} - \lambda\mathbf{I}\right) = 0$$

thus providing the $\lambda_k$ singular values of matrix $\mathbf{H}^H\mathbf{H}$.

Preferably, the non linear detector is a Sphere Decoder, and the process and receiver are used in a Long Term Evolution (LTE) system, and particularly in a mobile telephone.

**Description of the drawings**

Other features of one or more embodiments of the invention will best be understood by reference to the following detailed description when read in conjunction with the accompanying drawings.

Figure 1 illustrates one first embodiment of a process for computing Channel Quality Indicator (CQI) in a spatial multiplexed *NxN* MIMO system.

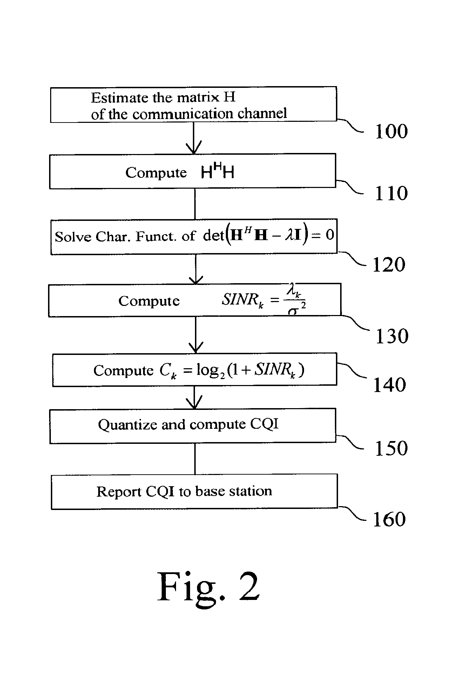

Figure 2 illustrates an embodiment of a process for computing Channel Quality Indicator (CQI) in a spatial multiplexed 2x2 MIMO system.

**Description of the preferred embodiments**

The preferred embodiments will be described in reference to the use of a Sphere Decoder which, as known by those skilled in the art, is a very effective non linear detection method.

However, it should be clear that the invention can be extended to other non linear detection methods.

The LTE standard requires a per stream CQI computation ensuring optimal system capacity exploitation whatever detection scheme is used.

Now two embodiments of a method proposed will be described:

1) a first embodiment can be used for any *NxN* MIMO system, but is approximate

2) a second embodiment provides an exact method but limited to the 2x2 case.

**1. First embodiment: general NxN MIMO system**

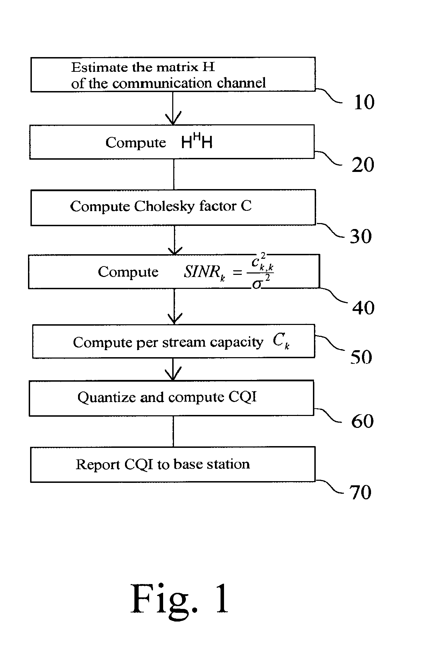

With respect to Figure 1 there is illustrated an embodiment of a process performed by a receiver of a spatial multiplexed *NxN* Multiple Input Multiple Output (MIMO) wireless communication system in order to compute Channel Quality Indicator (CQI) and report it back to a transmitter of the system.

In a step 10 of the process, the receiver of the *NxN* spatial multiplexed MIMO system estimates the matrix **H** of the communication channel. The estimation of the channel matrix **H** is performed by using conventional estimation means.

In a step 20, the process computes $\mathbf{H}^H\mathbf{H}$ by using computation means known to the man skilled in the art.

In a step 30, the process computes Cholesky factor **C**, with **C** being a triangular matrix having diagonal elements $c_{k,k}$. The computation of **C** is performed by applying the following equation:

$$\mathbf{H}^H\mathbf{H} = \mathbf{C}^H\mathbf{C}$$

and by using conventional computation means.

It should be noticed that many variations of algorithms are known for computing the Cholesky factor **C**.

In a step 40, the process proceeds with computing per stream Signal-to-Interference-and-Noise-Ratio (SINR) by applying the following formula:

$$SINR_k = \frac{c_{k,k}^2}{\sigma^2}$$

In the above formula, $\sigma^2$ denotes the noise variance.

For the sake of clarity, there will be illustrated known formulas for performing the Cholesky decomposition and for computing the $SINR_k$ in the case of a 3x3 MIMO system:

$$\mathrm{SINR}_k = \frac{c_{k,k}^2}{\sigma^2},$$

where

$$c_{k,k} = \sqrt{a_{k,k} - \sum_{i=1}^{k-1} |c_{i,k}|^2} \quad \text{and} \quad c_{j,i} = \frac{1}{c_{j,j}}\left( a_{j,i} - \sum_{k=1}^{j-1} c_{k,i} c_{k,j}^* \right) \text{ with } i > j$$

And $\mathbf{A} = \mathbf{H}^H\mathbf{H}$ and $a_{k,i}$ the scalar element on its $k$-th row and $i$-th column.

Therefore, in the case of a 3x3 MIMO:

$$\mathbf{C} = \begin{bmatrix} c_{1,1} & c_{1,2} & c_{1,3} \\ 0 & c_{2,2} & c_{2,3} \\ 0 & 0 & c_{3,3} \end{bmatrix} \qquad \mathbf{H} = \begin{bmatrix} h_{1,1} & h_{1,2} & h_{1,3} \\ h_{2,1} & h_{2,2} & h_{2,3} \\ h_{3,1} & h_{3,2} & h_{3,3} \end{bmatrix}$$

$$\mathbf{H}^H\mathbf{H} = \mathbf{A} = \begin{bmatrix} |h_{1,1}|^2 + |h_{2,1}|^2 + |h_{3,1}|^2 & h_{1,1}^* h_{1,2} + h_{2,1}^* h_{2,2} + h_{3,1}^* h_{3,2} & h_{1,1}^* h_{1,3} + h_{2,1}^* h_{2,3} + h_{3,1}^* h_{3,3} \\ h_{1,2}^* h_{1,1} + h_{2,2}^* h_{2,1} + h_{3,2}^* h_{3,1} & |h_{1,2}|^2 + |h_{2,2}|^2 + |h_{3,2}|^2 & h_{1,2}^* h_{1,3} + h_{22}^* h_{23} + h_{3,2}^* h_{3,3} \\ h_{1,3}^* h_{1,1} + h_{2,3}^* h_{2,1} + h_{3,3}^* h_{3,1} & h_{1,3}^* h_{1,2} + h_{2,3}^* h_{2,2} + h_{3,3}^* h_{3,2} & |h_{1,3}|^2 + |h_{2,3}|^2 + |h_{3,3}|^2 \end{bmatrix}$$

$SINR_1$ can be calculated as follows:

$$\mathrm{SINR}_1 = \frac{|c_{1,1}|^2}{\sigma^2} = \frac{a_{1,1}}{\sigma^2} = \frac{|h_{1,1}|^2 + |h_{2,1}|^2 + |h_{3,1}|^2}{\sigma^2}$$

And $SINR_2$ is computed as follows:

$$\mathrm{SINR}_2 = \frac{|c_{2,2}|^2}{\sigma^2} = \frac{a_{2,2} - |c_{1,2}|^2}{\sigma^2}$$

$$c_{1,2} = \frac{a_{1,2}}{c_{1,1}} = \frac{h_{1,1}^* h_{1,2} + h_{2,1}^* h_{2,2} + h_{3,1}^* h_{3,2}}{\sqrt{|h_{1,1}|^2 + |h_{2,1}|^2 + |h_{3,1}|^2}}$$

$$SINR_2 = \frac{|h_{1,2}|^2 + |h_{2,2}|^2 + |h_{3,2}|^2 - \dfrac{\left|h_{1,1}^* h_{1,2} + h_{2,1}^* h_{2,2} + h_{3,1}^* h_{3,2}\right|^2}{|h_{1,1}|^2 + |h_{2,1}|^2 + |h_{3,1}|^2}}{\sigma^2}$$

At last, $SINR_3$ is computed as follows :

$$SINR_3 = \frac{|c_{3,3}|^2}{\sigma^2} = \frac{a_{3,3} - |c_{1,3}|^2 - |c_{2,3}|^2}{\sigma^2}$$

$$c_{1,3} = \frac{a_{1,3}}{c_{1,1}} = \frac{h_{1,1}^* h_{1,3} + h_{2,1}^* h_{2,3} + h_{3,1}^* h_{3,3}}{\sqrt{|h_{1,1}|^2 + |h_{2,1}|^2 + |h_{3,1}|^2}}$$

$$c_{2,3} = \frac{1}{c_{2,2}}\left(a_{2,3} - c_{13}c_{12}^*\right) =$$

$$c_{23} = \frac{\left(\left(h_{1,2}^* h_{1,3} + h_{2,2}^* h_{2,3} + h_{3,2}^* h_{3,3}\right) - \left(\dfrac{h_{1,1}^* h_{1,3} + h_{2,1}^* h_{2,3} + h_{3,1}^* h_{3,3}}{\sqrt{|h_{1,1}|^2 + |h_{2,1}|^2 + |h_{3,1}|^2}}\right)\left(\dfrac{h_{1,1}^* h_{1,2} + h_{2,1}^* h_{2,2} + h_{3,1}^* h_{3,2}}{\sqrt{|h_{1,1}|^2 + |h_{2,1}|^2 + |h_{3,1}|^2}}\right)^*\right)}{\sqrt{|h_{1,2}|^2 + |h_{2,2}|^2 + |h_{3,2}|^2 - \dfrac{\left(h_{1,1}^* h_{1,2} + h_{2,1}^* h_{2,2} + h_{3,1}^* h_{3,2}\right)^2}{|h_{1,1}|^2 + |h_{2,1}|^2 + |h_{3,1}|^2}}}$$

Those are illustrating, non limiting examples of the computation of the $SINR_k$ for each stream.
Now, considering again Figure 1, one sees that the process proceeds from step 40 to a step 50 wherein the process computes the per-stream channel capacity $C_k$ by applying the computed $SINR_k$ to the following formula:

$$C_k = \log_2(1 + SINR_k).$$

In a further step 60, the process quantizes the Channel Quality Indicator (CQI) according to the computed per stream channel capacity $C_k$. For this scope, quantization means known to the man skilled in the art are used.
In a final step 70, the process reports the quantized CQI to the transmitter. The value of the CQI that is reported, determines the code rate and modulation scheme of the signal that will be later transmitted to the receiver on the downlink.
The CQI computation described in the above mentioned process regards spatial multiplexed MIMO systems of any order (*NxN* MIMO) but is an approximated one. The process is particularly fitted for the use of User Equipment (UE), such as a mobile phone, based on a non-linear sphere decoding detector.

## 2. Second embodiment: particular 2x2 MIMO system

In the second embodiment of the method which will now be described, there will be provided an accurate CQI computation achieving optimal channel capacity for a 2x2 spatial multiplexed MIMO system.

In a step 100 of the process, the receiver of the 2x2 spatial multiplexed MIMO system estimates the matrix **H** of the communication channel. The estimation of the channel matrix **H** is performed by using estimation means known by the man skilled in the art.

In a step 110, the process computes squared channel matrix $\mathbf{H}^H\mathbf{H}$ by using conventional computation means.

In a step 120, the process proceeds with performing Singular Value Decomposition (SVD) on the squared channel matrix $\mathbf{H}^H\mathbf{H}$ and deriving:

$$\mathbf{H}^H\mathbf{H} = \mathbf{U}\Lambda\mathbf{U}^H$$

with **U** denoting a unitary matrix, $\mathbf{U}^H$ denoting the conjugate transpose of **U** and A being a diagonal matrix with $\lambda_k$ singular values as diagonal elements.

It is important to note that in contrast with the prior patent US7428269, the inventors apply decomposition on the squared channel matrix $\mathbf{H}^H\mathbf{H}$ and not just on the channel matrix **H**. This differentiation shows to be very critical for improving the accuracy of the SINR estimation and CQI computation.

Indeed, it has been discovered that an exact way to compute the per-stream SINR can be found in the case of a Sphere Decoder detection.

In fact, through SVD of the channel matrix one can easily see that

$$\mathbf{H}^H\mathbf{H} = \mathbf{U}\Lambda\mathbf{U}^H$$

$$C = \log_2\left(\det\left(\mathbf{I} + \frac{1}{\sigma^2}\mathbf{H}^H\mathbf{H}\right)\right) =$$

$$= \log_2\left(\det\left(\mathbf{U}\mathbf{U}^H + \frac{1}{\sigma^2}\mathbf{U}\Lambda\mathbf{U}^H\right)\right) = \sum_{k=1}^{N}\log_2\left(1 + \frac{\lambda_k}{\sigma^2}\right)$$

Therefore, in order to compute the per-stream SINR, only the singular-values $\lambda_k$ of matrix $\mathbf{H}^H\mathbf{H}$ are needed.

As a consequence, in one embodiment, step 120 is performed by means of the solving of the characteristic equation of:

$$\det\left(\mathbf{H}^H\mathbf{H} - \lambda\mathbf{I}\right) = 0$$

Then it is easy to see that in the 2x2 case:

$$\mathbf{H} = \begin{bmatrix} h_{1,1} & h_{1,2} \\ h_{2,1} & h_{2,2} \end{bmatrix}$$

$$a_{1,1} = h_{1,1}h_{1,1}^* + h_{1,2}h_{1,2}^*,$$

$$a_{2,1} = h_{2,1}h_{1,1}^* + h_{2,2}h_{1,2}^* \, , \; a_{1,2} = a_{2,1}^* \, , \; a_{2,2} = h_{2,1}h_{2,1}^* + h_{2,2}h_{2,2}^* \, ,$$

$$\det\left(\mathbf{H}^H\mathbf{H} - \lambda\mathbf{I}\right) = 0$$

$$\det\begin{pmatrix} a_{11} - \lambda & a_{12} \\ a_{21} & a_{22} - \lambda \end{pmatrix} = 0$$

$$\lambda^2 - \lambda\left(a_{11} + a_{22}\right) + a_{11}a_{22} - a_{21}a_{21}^* = 0$$

$$\lambda_1 = \frac{a_{1,1} + a_{2,2} + \sqrt{\left(a_{1,1} + a_{2,2}\right)^2 - 4\left(a_{11}a_{22} - a_{21}a_{21}^*\right)}}{2} \, ,$$

$$\lambda_2 = \frac{a_{1,1} + a_{2,2} - \sqrt{\left(a_{1,1} + a_{2,2}\right)^2 - 4\left(a_{11}a_{22} - a_{21}a_{21}^*\right)}}{2}$$

In a step 130, the process proceeds with computing per stream Signal-to-Interference-and-Noise-Ratio (SINR) by applying the following formula:

$$SINR_k = \frac{\lambda_k}{\sigma^2} \, ,$$

with $\sigma^2$ being the noise variance.

Leading to the two values:

$$SINR_1 = \frac{\lambda_1}{\sigma^2}$$

$$SINR_2 = \frac{\lambda_2}{\sigma^2}$$

In a step 140, the process computes per stream channel capacity $C_k$ by applying the formula:

$$C_k = \log_2(1 + SINR_k)$$

In a step 150, the process proceeds with quantizing the Channel Quality Indicator (CQI) according to the computed per stream channel capacity $C_k$. Quantization means known to the man skilled in the art are used in this step.

In a final step 160, the process reports the quantized CQI to the transmitter. Specifically, the CQI value is reported by the receiver of the communication system and determines the code rate and modulation scheme of the signal that will be later transmitted by the transmitter on the downlink.

The invention is particularly adapted to the use of a non-linear sphere decoding detector, and more particularly to a mobile phone for a LTE communication system.

**Claims**

1. Process for computing Channel Quality Indicator (CQI) in a receiver for a spatial multiplexed Multiple Input Multiple Output (MIMO) wireless communication system, said receiver including a non linear detector, said process involving the steps of:

   - estimating (10) a channel matrix **H** at the receiver;
   - computing (20) $\mathbf{H}^H\mathbf{H}$;
   - computing (30) Cholesky factor **C**, with **C** being a triangular matrix having diagonal elements $c_{k,k}$ and satisfying the following equation:

   $$\mathbf{H}^H\mathbf{H} = \mathbf{C}^H\mathbf{C} ;$$

   - computing (40) per stream Signal-to-Interference Ratio (SINR) by applying the formula: : $SINR_k = \dfrac{c_{k,k}^2}{\sigma^2}$ , ;

   with $\sigma^2$ being the noise variance;
   - computing (50) per stream channel capacity $C_k$ by applying the formula:

   $$C_k = \log_2(1 + SINR_k) ;$$

   - quantizing (60) the Channel Quality Indicator (CQI) according to the computed per stream channel capacity $C_k$;
   - reporting (70) the quantized CQI to the transmitter.

2. Process according to claim 1 **characterized in that** the said non linear detector is a Sphere Decoder.

3. Process according to claim 1 **characterized in that** it is executed in a Long Term Evolution (LTE) system.

4. Process according to anyone of claim 1 to 3 **characterized in that** it is used in a mobile telephone.

5. Receiver for a spatial multiplexed NxN Multiple Input Multiple Output (MIMO) wireless communication system comprising means for computing Channel Quality Indicator (CQI), said receiver including a non linear detector and further comprising:

   - means for estimating (10) a channel matrix **H** at the receiver;
   - means for computing (20) $\mathbf{H}^H\mathbf{H}$;
   - means for computing (30) Cholesky factor **C**, with **C** being a triangular matrix having diagonal elements $c_{k,k}$ and satisfying the following equation: $\mathbf{H}^H\mathbf{H} = \mathbf{C}^H\mathbf{C}$;

- means for computing (40) per stream Signal-to-Interference Ratio (SINR) by applying the formula:

$$SINR_k = \frac{c_{k,k}^2}{\sigma^2} ,$$ , with $\sigma^2$ being the noise variance;

- means for computing (50) per stream channel capacity $C_k$ by applying the formula: $C_k = log_2(1 + SINR_k)$;
- means for quantizing (60) the Channel Quality Indicator (CQI) according to the computed per stream channel capacity $C_k$;
- means for reporting (70) the quantized CQI to the transmitter.

6. Receiver according to claim 5 **characterized in that** it includes a non linear detector is a Sphere Decoder.

7. Receiver according to claim 5 **characterized in that** it is used in a User Equipment (UE) for a Long Term Evolution (LTE) communication system.

8. Receiver according to claim 7 wherein said UE is a mobile telephone.

9. Process for computing Channel Quality Indicator (CQI) in a receiver for a 2x2 order spatial multiplexed Multiple Input Multiple Output (MIMO) wireless communication system, said receiver including a non linear detector and involving the steps of:

- estimating (100) a channel matrix **H** at the receiver;
- computing (110) squared channel matrix $\mathbf{H}^H\mathbf{H}$;
- performing (120) Singular Value Decomposition (SVD) on the squared channel matrix $\mathbf{H}^H\mathbf{H}$ under the form:

$$\mathbf{H}^H\mathbf{H} = \mathbf{U}\Lambda\mathbf{U}^H$$

with, **U** denoting a unitary matrix, $\mathbf{U}^H$ denoting the conjugate transpose of **U** and $\Lambda$ being a diagonal matrix with $\lambda_k$ singular values;

- computing (130) per stream Signal-to-Interference Ratio (SINR) by applying the formula $SINR_k = \frac{\lambda_k}{\sigma^2} ,$ ,

with $\sigma^2$ being the noise variance
- computing (140) per stream channel capacity $C_k$ by applying the formula: $C_k = log_2(1 + SINR_k)$;
- quantizing (150) the Channel Quality Indicator (CQI) according to the computed per stream channel capacity $C_k$;
- reporting (160) the quantized CQI to the transmitter.

10. Process according to claim 10 **characterized in that** said SVD is practically performed by means of solving the characteristic equation of:

$$\det\left(\mathbf{H}^H\mathbf{H} - \lambda\mathbf{I}\right) = 0$$

thus providing the $\lambda_k$ singular values

11. Process according to claim 10 **characterized in that** it said non linear detector is a Sphere Decoder.

12. Process according to claim 10 **characterized in that** it is executed in a Long Term Evolution (LTE) system.

13. Process according to anyone of claim 10 to 12 **characterized in that** it is used in a mobile telephone.

14. Receiver for a spatial multiplexed 2x2 Multiple Input Multiple Output (MIMO) wireless communication system comprising means for computing Channel Quality Indicator (CQI), said receiver including a non linear detector and further comprising:

- means for estimating (100) a channel matrix **H** at the receiver;
- means for computing (110) squared channel matrix $\mathbf{H}^H\mathbf{H}$;
- means for performing (120) Singular Value Decomposition (SVD) on the squared channel matrix $\mathbf{H}^H\mathbf{H}$ and deriving :

$$\mathbf{H}^H\mathbf{H} = \mathbf{U}\Lambda\mathbf{U}^H$$

with, **U** denoting a unitary matrix, $\mathbf{U}^H$ denoting the conjugate transpose of **U** and A being a diagonal matrix with $\lambda_k$ singular values;

- means for computing (130) per stream Signal-to-Interference Ratio (SINR) by applying the formula

$$SINR_k = \frac{\lambda_k}{\sigma^2}$$ , , with $\sigma^2$ being the noise variance

- means for computing (140) per stream channel capacity $C_k$ by applying the formula: $C_k = \log_2(1 + SINR_k)$;
- means for quantizing (150) the Channel Quality Indicator (CQI) according to the computed per stream channel capacity $C_k$;
- means for reporting (160) the quantized CQI to the transmitter.

15. Receiver according to claim 14 **characterized in that** said SVD is practically performed by means of solving the characteristic equation of:

$$\det\left(\mathbf{H}^H\mathbf{H} - \lambda\mathbf{I}\right) = 0$$

thus providing the $\lambda_k$ singular values

Estimate the matrix H
of the communication channel

$\sim$ 10

Compute $H^H H$

$\sim$ 20

Compute Cholesky factor C

$\sim$ 30

Compute $SINR_k = \dfrac{c_{k,k}^2}{\sigma^2}$

$\sim$ 40

Compute per stream capacity $C_k$

$\sim$ 50

Quantize and compute CQI

$\sim$ 60

Report CQI to base station

$\sim$ 70

# Fig. 1

```
┌─────────────────────────────────┐
│      Estimate the matrix H       │
│  of the communication channel    │──── 100
└─────────────────────────────────┘
              │
              ▼
┌─────────────────────────────────┐
│       Compute   HᴴH              │──── 110
└─────────────────────────────────┘
              │
              ▼
┌─────────────────────────────────┐
│ Solve Char. Funct. of  det(HᴴH − λI) = 0 │──── 120
└─────────────────────────────────┘
              │
              ▼
┌─────────────────────────────────┐
│  Compute      SINRₖ = λₖ/σ²      │──── 130
└─────────────────────────────────┘
              │
              ▼
┌─────────────────────────────────┐
│  Compute Cₖ = log₂(1 + SINRₖ)   │──── 140
└─────────────────────────────────┘
              │
              ▼
┌─────────────────────────────────┐
│      Quantize and compute CQI    │──── 150
└─────────────────────────────────┘
              │
              ▼
┌─────────────────────────────────┐
│      Report CQI to base station  │──── 160
└─────────────────────────────────┘
```

Solve Char. Funct. of $\det(\mathbf{H}^H\mathbf{H} - \lambda\mathbf{I}) = 0$

$SINR_k = \dfrac{\lambda_k}{\sigma^2}$

$C_k = \log_2(1 + SINR_k)$

# Fig. 2

14

Europäisches
Patentamt

European
Patent Office

Office européen
des brevets

# EUROPEAN SEARCH REPORT

**Application Number**

EP 09 36 8038

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 7 428 269 B2 (SAMPATH HEMANTH [US] ET AL) 23 September 2008 (2008-09-23)<br>* abstract *<br>* column 2, line 36 - column 3, line 67 *<br>* column 11, line 23 - column 12, line 15 *<br>* claims 1-6 *<br>* pages 3, 7; figures 3, 7 *<br>----- | 1-15 | INV.<br>H04B7/06<br>H04B7/08<br>H04B7/04 |
| A | US 2008/019457 A1 (WATERS DERIC W [US] ET AL) 24 January 2008 (2008-01-24)<br>* abstract *<br>* paragraphs [0002] - [0009], [0 18] - [0044] *<br>* claims 1-6 *<br>* figure 2 *<br>----- | 1-15 | |

**TECHNICAL FIELDS SEARCHED (IPC)**

H04B

The present search report has been drawn up for all claims

| Place of search | Date of completion of the search | Examiner |
|---|---|---|
| Munich | 5 February 2010 | Helms, Jochen |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## EP 2 309 659 A1

**ANNEX TO THE EUROPEAN SEARCH REPORT
ON EUROPEAN PATENT APPLICATION NO.**

EP 09 36 8038

This annex lists the patent family members relating to the patent documents cited in the above-mentioned European search report.
The members are as contained in the European Patent Office EDP file on
The European Patent Office is in no way liable for these particulars which are merely given for the purpose of information.

05-02-2010

| Patent document cited in search report | | Publication date | Patent family member(s) | | Publication date |
|---|---|---|---|---|---|
| US 7428269 | B2 | 23-09-2008 | AR<br>EP<br>JP<br>KR<br>US<br>WO | 053884 A1<br>1889393 A2<br>2008546323 T<br>20080021057 A<br>2006276212 A1<br>2006130865 A2 | 23-05-2007<br>20-02-2008<br>18-12-2008<br>06-03-2008<br>07-12-2006<br>07-12-2006 |
| US 2008019457 | A1 | 24-01-2008 | WO | 2008011451 A2 | 24-01-2008 |

EPO FORM P0459

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 7428269 B, Qualcomm